# EUROPÄISCHE PATENTSCHRIFT

(11) **EP 0 695 402 B1**
(45) Veröffentlichungstag und Bekanntmachung des Hinweises auf die Patenterteilung: **20.01.1999**
(21) Anmeldenummer: 94913020.7
(22) Anmeldetag: 27.04.1994
(51) Int. Cl.: F16D 65/16

(54) **SCHEIBENBREMSE**
DISC BRAKE
FREIN A DISQUE

(30) Priorität: 28.04.1993 FR 9304989
(43) Veröffentlichungstag der Anmeldung: 07.02.1996
(73) Patentinhaber: KNORR-BREMSE Systeme für Nutzfahrzeuge GmbH, 80809 München (DE)
(72) Erfinder: CORTES GUASCH, Esteve, E-08304 Mataro (ES); SIMON BACARDIT, Joan, E-08013 Barcelone (ES); VILA BOLUDA, Jose Manuel, Avenida Llerona, 14, E-08520 Barcelone (ES)
(86) Internationale Anmeldenummer: DE9400468
(87) Internationale Veröffentlichungsnummer: WO9425772

(56) Entgegenhaltungen:
- EP-A- 0 260 934
- WO-A-92/07202
- DE-A- 4 217 983

## Beschreibung

Die Erfindung betrifft eine Scheibenbremse, insbesondere für Fahrzeuge.

Scheibenbremsen von bekannter Schiebesattel-Bauart (WO-A 92/07 202) weisen bei zweispindeliger, also zwei Druckstücke aufweisender Konstruktion einen Drehhebel auf, der sich an einer in Richtung der Bremsscheibe offenen Lagerfläche des Bremssattelgehäuses abstützt und über eine Exzenteranordnung auf eine Traverse einwirkt. An der Traverse sind zwei Spindeln geführt, welche ihrerseits je ein unmittelbar auf den Bremsbelag einwirkendes Druckstück tragen. In einer der Spindeln befindet sich eine Nachstelleinrichtung, deren Wirkungsweise über einen Synchronantrieb auf die zweite Spindel übertragbar ist. Die Folge ist erhöhter Bauraum in Bremsscheibenquerrichtung und daraus resultierend erhöhter Aufwand des Gesamtaufbaues, da es erforderlich ist, die zwei Nachstellsysteme im Bereich der beiden Spindeln zu synchronisieren, um gleichförmigen Verschleiß der Bremsbeläge zu erreichen.

Bei Verwendung eines automatischen Nachstellers in der Achse des Druckstückes gemäß einer weiterhin bekannten Konstruktion (EP-A-0,260,034 A1) ist es infolge der Hintereinanderschaltung von Exzentermechanismus und Druckstück erforderlich, die Axiallänge der Scheibenbremse beträchtlich zu vergrößern. Um verkürzte Baulänge zu erhalten, wäre es wie im Falle der Ausführungsform des erstgenannten Dokumentes nötig, die Achse des automatischen Nachstellsystemes bezüglich der Achse des zur Betätigung dienenden Druckstückes unter Verwendung einer Traverse zu versetzen. Dies wiederum würde jedoch zu einer unverhältnismäßig komplexen und teuren Konstruktion und zu erhöhtem Bauraum in Querrichtung der Scheibenbremse führen.

Davon ausgehend besteht die Aufgabe der Erfindung darin, eine Scheibenbremse der in Rede stehenden Art - in Anwendung an einer einspindeligen Konstruktion - so auszubilden, daß sie bei reduziertem Bauraum die Möglichkeit bietet, ein automatisch wirkendes Nachstellsystem in axialer Zuordnung im Druckstück wirken zu lassen.

Zur Lösung dieser Aufgabe dienen die Merkmale nach Patentanspruch 1.

Die unmittelbare Verbindung des Druckstückes mit den Abschnitten des Lagerzapfens vermittelt den wesentlichen Vorteil, daß innerhalb des Druckstückes in baulich versetzter Lage der Nachsteller von automatischer Wirkungsweise angeordnet sein kann. Der Nachsteller kann somit relativ nahe bezüglich der Bauebene der Drehhebelanordnung plaziert sein d. h. die Scheibenbremse ist im Gegensatz zu Konstruktionen, bei welchen Exzenterbetätigung und Nachsteller hintereinander geschaltet sind, von gedrängter Bauart.

Vorteilhafte Ausgestaltungen und Weiterbildungen sind in weiteren Patentansprüchen aufgeführt.

Die Erfindung ist nachfolgend anhand eines Ausführungsbeispieles unter Bezugnahme auf die beigefügte Zeichnung erläutert.
Figur 1 ist eine Axialschnittansicht der Scheibenbremse nach der Erfindung;

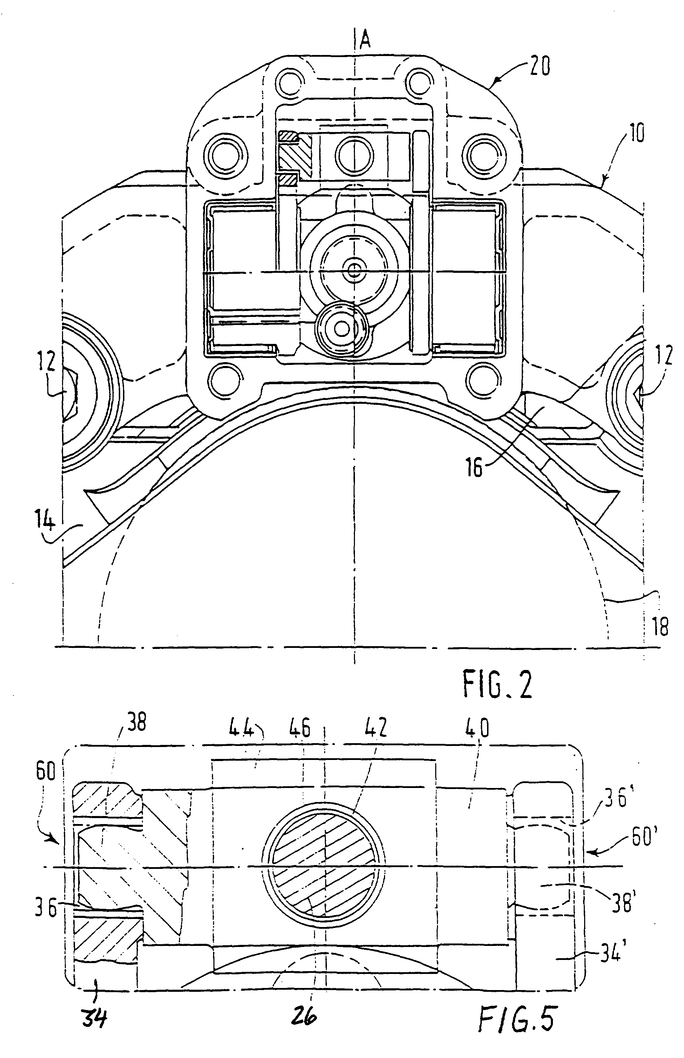

Figur 2 ist eine Querschnittansicht der Scheibenbremse nach Figur 1;
Figur 3 ist eine Axialschnittansicht des Betätigungs- bzw. Zuspannmechanismus der Scheibenbremse;
Figur 4 ist eine Querschnittansicht des Betätigungs- bzw. Zuspannmechanismus nach Figur 3;
Figur 5 ist eine vergrößerte Einzeldarstellung der Anordnung nach Figur 4; und
Figur 6 ist eine Perspektivansicht des Druckstückes der erfindungsgemäßen Scheibenbremse.

Die in den Figuren dargestellte Scheibenbremse weist einen Bremssattel 10 auf, welcher mit Hilfe von Führungsbolzen 12 auf einem feststehenden Träger 14 verschiebbar ist; der Träger 14 ist einem feststehenden Teil des Motorfahrzeuges (nicht dargestellt) zugeordnet. Die Scheibenbremse enthält auf beiden Seiten einer Bremsscheibe 18 Bremsbeläge 16. Der Bremssattel 10 ist mit einer Betätigungseinrichtung 20 ausgestattet.

Im dargestellten Ausführungsbeispiel ist die Betätigungseinrichtung 20 von pneumatischer Wirkungsweise und enthält ein Gehäuse 22, welches durch eine Membrane 24 in zwei Kammern unterteilt ist. Die Membrane 24 betätigt eine Kolbenstange 26 unter Einwirkung der unterschiedlichen Drücke, welche auf den beiden Membranflächen zur Wirkung gelangen. Eine Druckfeder 28 dient dazu, die Membrane 24 und die Kolbenstange 26 in ihre Ausgangsposition zurückzubewegen.

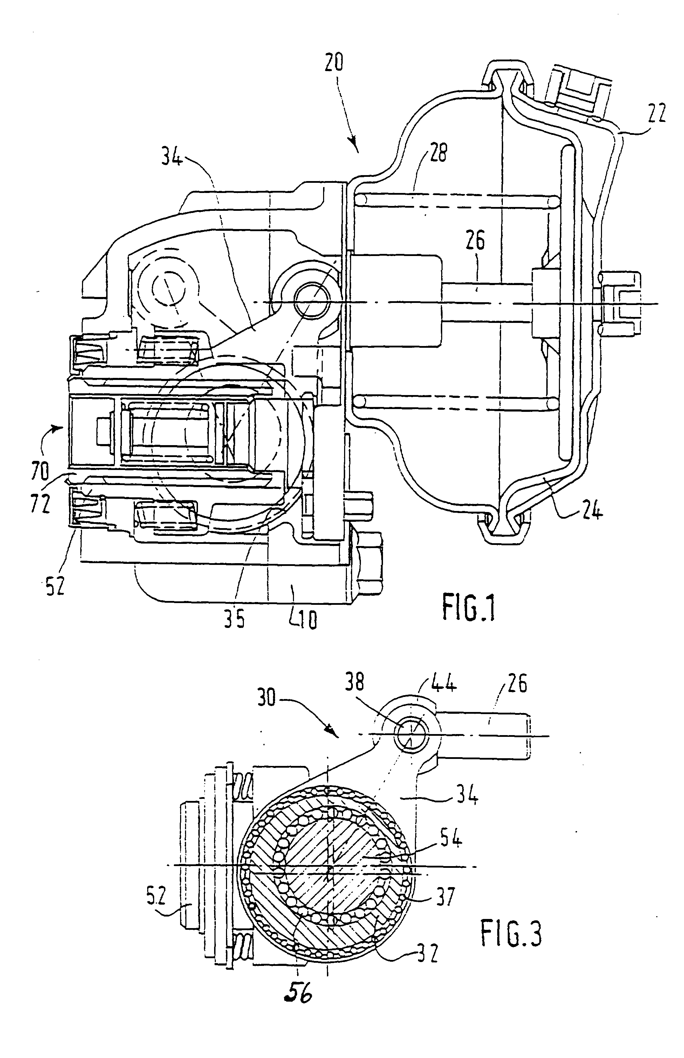

Die Kolbenstange 26 betätigt eine Drehhebelanordnung 30, welche im einzelnen in den Figuren 3-5 wiedergegeben ist, wobei Figur 3 eine Schnittansicht von Linie III-III in Figur 4 darstellt. Es ist ersichtlich, daß die Drehhebelanordnung 30 mit zwei einzelnen, zylindrischen Lagerschalen 32 und 32' versehen ist, welche symmetrisch bezüglich der durch die Achse der Bremsscheibe 18 und die Achse XX' verlaufenden Ebene A ausgerichtet sind.

Jede Lagerschale 32, 32' weist einen Hebel bzw. radialen Ansatz 34, 34' auf, welcher Bestandteil der Drehhebelanordnung ist. Eine Öffnung 36, 36' ist am Ende jedes radialen Ansatzes 34, 34' ausgebildet.

Die Öffnungen 36, 36' nehmen die Enden 38, 38' eines Quersteges 40 auf; in der Mitte dieses Quersteges befindet sich eine Öffnung 42 (Figur 5), welche zur Aufnahme der Kobenstange 26 der Zuspanneinrichtung bzw. Betätigungseinrichtung 20 dient. Eine zylindrische Hülse 44 mit einer Öffnung 46 kann auf den Quersteg 40 geschoben werden, um diesen durch die Kolbenstange 26 zu betätigen. Jede Lagerschale 32, 32' ist jeweils mit einer Bohrung 48, 48' versehen, deren Achse YY' gegenüber der Achse XX' versetzt ist.

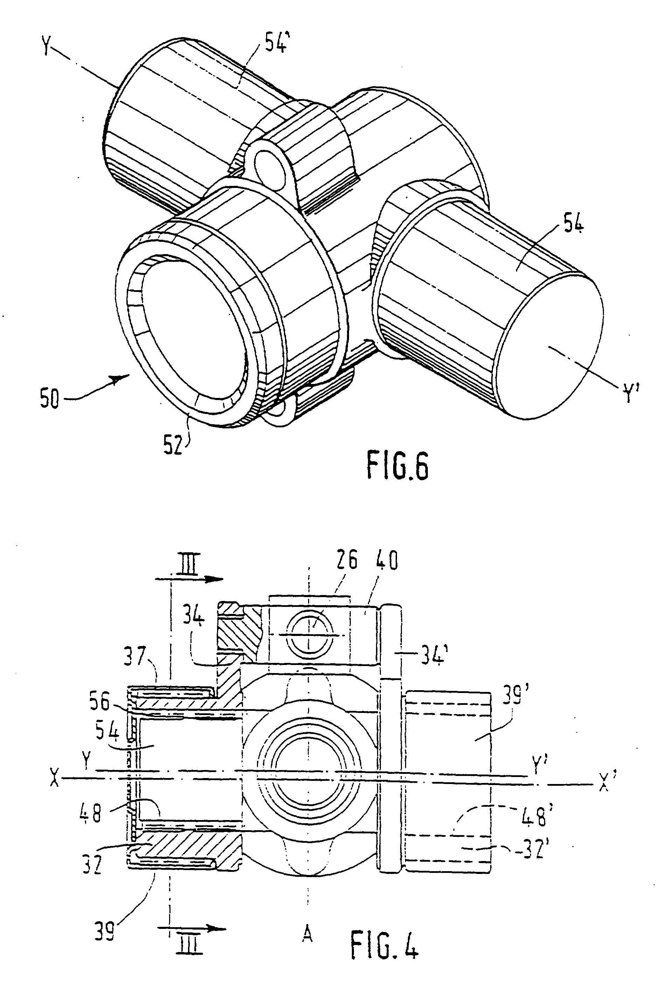

Wenn die Scheibenbremse zusammengesetzt ist, wie dies aus Figur 1 hervorgeht, dann sind die Lagerschalen 32, 32' in wenigstens teilzylindrischen Lagerflächen 35 des Bremssattels 10 drehbar gelagert. Es reicht im wesentlichen aus, daß der Bremssattel eine konkavzylindrische Lagerfläche 35 aufweist, welche nach vorne gerichtet ist. Zwischen den Lagerschalen 32, 32' und der konkav-zylindrischen Lagerfläche des Bremssattels ist eine Wälzlagerung vorgesehen, so z. B. in Form selbstschmierender Lager, oder gemäß Darstellung in Form von Wälzlagern 37, 37', welche durch Käfige 39, 39' geschützt sind.

Die Scheibenbremse weist im weiteren ein Druckstück 50 auf, welches in Figur 6 in Perspektivansicht wiedergegeben ist. Das Druckstück 50 besteht im wesentlichen aus einem Hohlzylinder 52, welcher durch zwei massiv ausgebildete Lagerzapfenabschnitte eines Lagerzapfens 54, 54' betätigbar ist. Die Lagerzapfenabschnitte sind koaxial zueinander und erstrecken sich senkrecht zum Hohlzylinder 52, wobei sie am Druckstück 50 befestigt d. h. einstückig mit diesem ausgebildet sind. Die zwei Lagerzapfenabschnitte des Lagerzapfens 54, 54' bilden die zwei Lagerflächen einer exzentrischen Lagerung und sind drehbar in den Bohrungen 48, 48' der Lagerschalen 32, 32' aufgenommen.

Zwischen den Lagerflächen des Lagerzapfens 54, 54' und den Lagerschalen 32, 32' können Wälzlager 56, 56' vorgesehen sein, so selbstschmierende Lager, oder gemäß Darstellung Nadellager.

Die Wirkungsweise der Scheibenbremse ist unter Bezugnahme auf die vorstehenden Erläuterungen verständlich.

Wenn sich die Scheibenbremse in Ruhelage befindet, d. h. in der in Figur 1 dargestellten Position und Bremsbetätigung erwünscht ist, dann wird im Gehäuse 22 zwischen den durch die Membrane 24 getrennten Kammern ein Druckgefälle erzeugt, so indem z. B. der Druck in der rückwärtigen Kammer (rechts in Figur 1) erhöht wird oder indem der Druck in der vorderen Kammer (links in Figur 1) reduziert wird.

Unter Einwirkung dieses Differenzdruckes bewegen sich die Membrane 24 und die Kolbenstange 26 nach vorne, wobei das Vorderende der Kolbenstange 26 mit der Hülse 44 zusammenwirkt, um den Quersteg 40 nach vorne gerichtet zu bewegen. Der Quersteg trägt zu einer nach vorne gerichteten Verschwenkung der beiden Hebel bzw. Ansätze 34, 34' bei.

Um den Fertigungstoleranzen zwischen den Baulängen der Hebelarme bzw. radialen Ansätze 34, 34', zwischen den Exzentrizitäten der Bohrungen 48, 48' in den Lagerschalen 32, 32', den Durchmessern dieser Bohrungen und dieser Schalen als auch des Krümmungsradius der Lagerfläche 35 gerecht zu werden und um nicht zu große Spannungen in den verschiedenen Bauteilen der Scheibenbremse entstehen zu lassen, kann vorzugsweise jeweils ein Kugelgelenk 60, 60' zwischen jedem Ende 38, 38' des Quersteges 40 und dem entsprechenden Ansatz 34, 34' vorgesehen sein. So können z. B. die Enden 38, 38' Teilkugelform besitzen und mit den Innenwänden der Öffnungen 36, 36' am Ende der Hebel oder Ansätze 34, 34' zusammenwirken, derart, daß ein kleiner Winkelausschlag bezüglich des rechten Winkels ermöglicht ist, welcher normalerweise zwischen der Achse 34, 34' des Quersteges 40 und der Achse der Ansätze 34, 34' besteht.

Es können andererseits auch am Ende der Ansätze 34, 34' teilkugelförmige Vorsprünge vorgesehen sein, welche in Richtung der Ebene A gerichtet sind und mit der Wandung der an den Enden des Quersteges 40 befindlichen Bohrungen zusammenwirken.

Es kann auch ein Kugelgelenk zwischen dem Quersteg 40 und der Kolbenstange 26 vorgesehen sein, indem das Ende der Kolbenstange 26 eine Teilkugelform erhält, welche mit der Innenwand der Öffnung 42 des Quersteges zusammenwirkt.

Während ihrer nach vorne gerichteten Schwenkbewegung bewirken die Ansätze 34, 34', daß sich die Lagerschalen 32, 32' um ihre Achse XX' drehen, wobei sie sich an der in Richtung der Bremsscheibe ausgerichteten Lagerfläche 35 des Bremssattels rollend abstützen.

Durch die Drehung der Lagerschalen 32, 32' um ihre Achse XX' wird eine Drehung der Achse YY' der Bohrungen 48, 48' um diese Achse XX' ausgelöst. Die Lagerzapfenabschnitte des Lagerzapfens 54, 54' bewegen sich also nach vorne, während sich die Lagerschalen 32, 32' um sie drehen. Da die Lagerzapfenabschnitte mit dem Druckstück 50 verbunden sind oder einteilig mit diesem bestehen, wird auch das Druckstück nach vorne gerichtet bewegt.

Mit Hilfe der erfindungsgemäßen, vorstehend beschriebenen Anordnung, d. h. mittels der exzentrischen Lagerung, welche mit Hilfe der beidseitig des Druckstückes 50 angeordneten Lagerzapfenabschnitte bewegt wird, ist es möglich, innerhalb des Druckstückes 50, also innerhalb des Hohlzylinders, ein automatisch wirkendes Nachstellsystem unterzubringen, wie in Figur 1 dargestellt ist, da kein gegenseitiger Eingriff zwischen diesem System und der Welle der exzentrischen Lagerung möglich ist.

Der Hohlzylinder 52 kann mit einem Innengewinde versehen sein und die Steuer-bzw. Stellmutter eines automatischen Nachstellersystems beliebiger Art bilden, welches die Drehung einer Stellschraube 72 steuert, deren voreres Ende sich in direktem Kontakt mit der Bremsbacke bzw. dem Bremsbelag 16 befindet. Durch Drehung der Stellschraube 72 wird die Schrauben-Mutter-Anordnung 52-72 als Funktion des Verschleißes des Bremsbelages 16 ausgefahren.

Ein wesentlicher Vorteil der erfindungsgemäßen Anordnung besteht darin, daß das automatische Nachstellsystem den gesamten Innenraum des Druckstückes 50 einnehmen kann und hierdurch eine beträchtliche Streckung der Schrauben-Mutter-Anordnung 52-72 ermöglicht ist. Auf diese Weise kann man wesentlich dickere Bremsbeläge verwenden, was zu weniger häufigen Belagwechseln führt. Dies stellt bei Nutzfahrzeugen einen Vorteil dar, da Stillstandszeiten auf ein Minimum zu reduzieren sind.

Gemäß der Erfindung wurde eine Scheibenbremse geschaffen, welche sowohl in Axialrichtung als auch in Querrichtung kompakt gebaut und sehr einfach in der Fertigung und in der Zusammenstellung ist. Durch die einfache Konstruktion und die Einfachheit des Zusammenbaues ist Zuverlässigkeit im Betrieb erreicht. Darüberhinaus können die Herstellungskosten der Scheibenbremse gesenkt werden als auch ihre Wartungskosten.

Die Erfindung ist nicht auf die beschriebene Ausführungsform beschränkt, sondern umfaßt verschiedenartige Ausgestaltungen und Weiterbildungen, welche dem Fachmann geläufig sind.

## Patentansprüche

1. Scheibenbremse, insbesondere für Fahrzeuge, mit einem Bremssattel (10), welcher mit wenigstens einem axialen Führungsbolzen (12) auf einem feststehenden Träger (14) verschiebbar ist, mit einer Betätigungseinrichtung, welche mittels eines Druckstückes (50) auf eine erste Bremsbacke (16) und als Reaktion über den Bremssattel (10) auf eine zweite Bremsbacke einwirkt, wobei die Betätigungseinrichtung eine Kolbenstange (26) enthält, die auf eine Drehhebelanordnung (30) einwirkt, welche sich um eine senkrecht zur Achse der Bremsscheibe stehende Achse (X, X') dreht, sich an einer in Richtung der Bremsscheibe (18) offenen Lagerfläche (35) des Bremssattels (10) abstützt und mittels einer Exzenterlagerung mit dem Druckstück (50) zusammenwirkt, und wobei die Exzenterlagerung einen Lagerzapfen (54, 54') enthält, welcher einstückig mit dem Druckstück (50) ausgebildet ist und unter Führung an der Drehhebelanordnung (30) um eine Achse (Y, Y') drehbar ist, die bezüglich der Achse (X, X') der Drehhebelanordnung (30) im Bremssattel (10) versetzt ist.

2. Scheibenbremse nach Anspruch 1, **gekennzeichnet durch** folgende Merkmale:
a) der Lagerzapfen (54, 54') besteht aus zwei zu beiden Seiten des Druckstückes (50) senkrecht zu diesem sich erstreckenden Lagerzapfenabschnitten; und
b) die Lagerzapfenabschnitte sind unter exzentrischer Versetzung in Lagerschalen (32, 32') der Drehhebelanordnung (30) drehbar geführt.

3. Scheibenbremse nach Anspruch 2, **gekennzeichnet durch** folgende Merkmale:
a) die Lagerschalen (32, 32') weisen je eine mittenversetzte Öffnung zur drehbaren Lagerung der Lagerzapfenabschnitte auf; und
b) von den Lagerschalen (32, 32') erstrecken sich radiale Ansätze (34, 34'), welche mit der Kolbenstange (26) gekoppelt sind.

4. Scheibenbremse nach Anspruch 2 oder 3, **dadurch gekennzeichnet**, daß die beiden Ansätze (34, 34') durch einen Quersteg (40) miteinander verbunden sind, und daß das der Bremsscheibe zugewandte Ende der Kolbenstange (26) mittig am Quersteg (40) angreift.

5. Scheibenbremse nach Anspruch 3 oder 4, **dadurch gekennzeichnet**, daß die Enden des Quersteges (40) jeweils mittels eines Kugelgelenkes (60, 60') am Ende der Ansätze (34, 34') angelenkt sind.

6. Scheibenbremse nach Anspruch 5, **dadurch gekennzeichnet,** daß das Ende der Kolbenstange (26) mittels eines Kugelgelenkes mit dem Quersteg (40) gekoppelt ist.

7. Scheibenbremse nach einem der vorangehenden Ansprüche, **dadurch gekennzeichnet**, daß die Lagerschalen (32, 32') jeweils mit einem Wälzlager (37, 37') gegenüber dem Bremssattel (10) geführt sind, und daß die Lagerzapfenabschnitte mit Hilfe von Wälzlagern (56, 56') in den sie exzentrisch aufnehmenden Lagerschalen (32, 32') geführt sind.

8. Scheibenbremse nach Anspruch 7, **dadurch gekennzeichnet**, daß die Wälzlager (37, 37'); (56, 56') aus Nadellagern bestehen.

9. Scheibenbremse nach einem der vorangehenden Ansprüche, **dadurch gekennzeichnet**, daß die Betätigungseinrichtung einen pneumatischen Antrieb enthält, welcher auf die Kolbenstange (26) einwirkt.

## Claims

1. Disc brake, particularly for vehicles, comprising a brake calliper (10) which is displaceable with at least one axial guide bolt (12) along a stationary bracket (14), an actuator means acting upon a first brake shoe (16) by means of a pressing element (50) and in response, via said brake calliper (10), upon a second brake shoe, which actuator means includes a piston rod (26) acting upon a pivoting lever mechanism (30) which rotates about an axis (X, X') normal on the axis of the brake disc and is supported on a bearing surface (35) of said brake calliper (10) open in a direction toward said brake disc (18) and co-operates with said pressing element (50) by means of an eccentric bearing, and wherein the eccentric bearing includes a journal (54, 54') which is integrally formed on said pressing element (50) and which is adapted for rotation about an axis (Y, Y') whilst it is guided on said pivoting lever mechanism, which axis is offset relative to said axis (X, X') of said pivoting lever mechanism (30) in said brake calliper (10).

2. Disc brake according to Claim 1, **characterised by** the following features:
(a) said journal (54, 54') consists of two journal segments extending on both sides of said pressing element (50) in a direction orthogonal on the latter; and
(b) said journal segments are guided for rotation in bearing shells (32, 32') of said pivoting lever mechanism (30) with an eccentric offset.

3. Disc brake according to Claim 2, **characterised by** the following features:
(a) said bearing shells (32, 32') present each an off-centre opening for the rotatable support of said journal segments; and
(b) radial shoulders (34, 34') extend from said bearing shells (32, 32'), which are linked to said piston rod (26).

4. Disc brake according to Claim 2 or 3, **characterised in** that said two shoulders (34, 34') are interconnected by a crossbar (40), and that the end of said piston rod (26), which faces the brake disc, is attached centrally on said crossbar (40).

5. Disc brake according to Claim 3 or 4, **characterised in** that each of the ends of said crossbar (40) is articulated at the end of said shoulders (34, 34') by means of a ball joint (60, 60').

6. Disc brake according to Claim 5, **characterised in** that the end of said piston rod (26) is linked to said crossbar (40) by means of a ball joint.

7. Disc brake according to any of the preceding Claims, **characterised in** that said bearing shells (32, 32') are guided each by means of an antifriction bearing (37, 37') opposite said brake calliper (10), and that said journal segments are guided by means of antifriction bearings (56, 56') in said bearing shells (32, 32') eccentrically accommodating them.

8. Disc brake according to Claim 7, **characterised in** that said antifriction bearings (37, 37'); (56, 56') consist of needle bearings.

9. Disc brake according to any of the preceding Claims, **characterised in** that said actuator means comprises a pneumatic driving mechanism which acts upon said piston rod (26).

## Revendications

1. Frein à disque, en particulier pour véhicules, comprenant un étrier (10) qui est déplaçable au moyen d'au moins une broche-guide axiale (12) le long d'un support stationnaire (14), un organe de mise en action qui agit sur une première mâchoire (16) moyennant un membre de pression (50) et, en réponse, via ledit étrier (10), sur une deuxième mâchoire, lequel organe de mise en action comprend une tige de piston (26) agissant sur un mécanisme à levier tournant (30) qui tourne autour d'un axe (X, X') orthogonal sur l'axe de la disque à frein et qui s'appuie sur une surface d'appui (35) dudit étrier (10) qui est ouverte en direction vers disque à frein (18) et qui coopère avec ledit membre de pression (50) moyennant un logement excentrique, et dans lequel le logement excentrique comprend un tourillon (54, 54') qui est intégral sur ledit membre de pression (50) et qui est rotatif autour d'un axe (Y, Y') en étant guidé sur ledit mécanisme à levier tournant, lequel axe est décalé relativement audit axe (X, X') dudit mécanisme à levier tournant (30) dans ledit étrier (10).

2. Frein à disque selon la revendication 1, **caractérisé par** les caractéristiques suivantes:
(a) ledit tourillon (54, 54') est composé de deux parties de tourillon qui s'étendent des deux côtés dudit membre de pression (50) en une direction orthogonale sur le dernier, et
(b) lesdites parties de tourillon sont guidées de façon rotative dans des coquilles de coussinet (32, 32') dudit mécanisme à levier tournant (30) à un déport excentrique.

3. Frein à disque selon la revendication 2, **caractérisé par** les caractéristiques suivantes:
(a) chacune desdites coquilles de coussinet (32, 32') présente une ouverture à excentricité pour le logement rotatif desdites parties de tourillon; et
(b) des saillies radiales (34, 34') s'étendent desdites coquilles de coussinet (32, 32'), qui sont couplées à ladite tige de piston (26).

4. Frein à disque selon la revendication 2 ou 3, **caractérisé en ce** que lesdites deux saillies (34, 34') sont reliées l'une à l'autre par une traverse (40), et en ce que l'extrémité de ladite tige de piston (26), qui se trouve en face de la disque à frein, est rattachée centralement à ladite traverse (40).

5. Frein à disque selon la revendication 3 ou 4, **caractérisé en ce** que chacune des extrémités de ladite traverse (40) est articulée à l'extrémité desdites saillies (34, 34') moyennant une articulation sphérique (60, 60').

6. Frein à disque selon la revendication 5, **caractérisé en ce** que l'extrémité de ladite tige de piston (26) est couplée à ladite traverse (40) ,moyennant une articulation sphérique.

7. Frein à disque selon une quelconque des revendication précédentes, **caractérisé en ce** que chacune desdites coquilles de coussinet (32, 32') est guidée au moyen d'un palier à roulement (37, 37') en face dudit étrier (10), et en ce que lesdites parties de tourillon sont guidées au moyen d'un palier à roulements (56, 56') dans lesdites coquilles de coussinet (32, 32') qui les reçoivent de façon excentrique.

8. Frein à disque selon la revendication 7, **caractérisé en ce** que ledit palier à roulements (37, 37'); (56, 56') consiste en roulements à aiguilles.

9. Frein à disque selon une quelconque des revendications précédentes, **caractérisé en ce** que ledit organe de mise en action comprend un mécanisme moteur pneumatique, qui agit sur ladite tige de piston (26).
